# EUROPÄISCHE PATENTSCHRIFT

(11) **EP 3 636 118 B1**
(45) Veröffentlichungstag und Bekanntmachung des Hinweises auf die Patenterteilung: **23.06.2021**
(21) Anmeldenummer: 19199787.3
(22) Anmeldetag: 26.09.2019
(51) Int. Cl.: A47J 36/32, A47J 43/07, A47J 43/06, A47J 43/04, A47J 27/00

(54) **KÜCHENGERÄT MIT ADAPTIVER EINSTELLUNG EINES BETRIEBSPARAMETERS**
KITCHEN APPLIANCE WITH ADAPTIVE ADJUSTMENT OF AN OPERATING PARAMETER
APPAREIL DE CUISINE À RÉGLAGE ADAPTATIF D'UN PARAMÈTRE DE FONCTIONNEMENT

(30) Priorität: 11.10.2018 DE 102018217416
(43) Veröffentlichungstag der Anmeldung: 15.04.2020
(73) Patentinhaber: BSH Hausgeräte GmbH, 81739 München (DE)
(72) Erfinder: Kick, Bernhard, 83301 Traunreut (DE); Brunner, Andreas, 83301 Traunreut (DE); Krüger, Tobias, 80639 München (DE)

(56) Entgegenhaltungen:
- EP-A1- 0 589 093
- EP-A2- 2 574 261
- WO-A1-2017/004661
- DE-C1- 4 422 086
- US-A- 5 071 077
- US-A1- 2017 055 775

## Beschreibung

Die Erfindung betrifft ein Küchengerät. Insbesondere betrifft die Erfindung Maßnahmen zur Erhöhung der Betriebssicherheit und des Komforts eines Küchengeräts.

Ein Küchengerät, insbesondere ein Multifunktionsgerät, kann dazu verwendet werden, in einem Behälter Nahrungsmittel zu verarbeiten, z.B. zu raspeln, zu kneten, zu zerkleinern, zu vermischen und/oder zu garen. Ein Küchengerät kann zumindest einen Motor aufweisen, mit dem ein Verarbeitungsaufsatz bzw. ein Werkzeug (z.B. ein Messer oder ein Knethaken) angetrieben wird. Außerdem kann das Küchengerät eine Temperierungseinheit aufweisen, mit der ein Nahrungsmittel in dem Behälter des Küchengeräts temperiert, insbesondere erwärmt, werden kann. Des Weiteren kann ein Küchengerät zumindest ein Bedienelement auf, mit dem der Motor aktiviert bzw. deaktiviert werden kann, mit dem eine Soll-Drehzahl des Motors eingestellt werden kann und/oder mit dem eine Soll-Temperatur für den Behälter eingestellt werden kann. WO 2017/004661 A1 beschreibt ein Küchengerät, das die Identität eines Verarbeitungsaufsatzes dazu nutzt einen Geschwindigkeitsparameter und die Temperatur des Küchengeräts einzustellen.

Das vorliegende Dokument befasst sich mit der technischen Aufgabe, die Betriebssicherheit und/oder den Komfort eines Küchengeräts, insbesondere einer Küchenmaschine, etwa eines Kochprozessors, weiter zu erhöhen.

Die Aufgabe wird jeweils durch den Gegenstand der unabhängigen Patentansprüche gelöst. Vorteilhafte Ausführungsformen sind insbesondere in den abhängigen Patentansprüchen definiert, in nachfolgender Beschreibung beschrieben oder in der beigefügten Zeichnung dargestellt.

Gemäß einem Aspekt der Erfindung wird ein Küchengerät, insbesondere eine Küchenmaschine (ggf. mit Garfunktion), beschrieben. Das Küchengerät kann ausgebildet sein, auf eine Arbeitsplatte einer Küche gestellt zu werden. Des Weiteren kann das Küchengerät ausgebildet sein, einen Nutzer bei der Herstellung eines Nahrungsmittels aus ein oder mehreren Zutaten zu unterstützen.

Das Küchengerät umfasst einen Behälter (z.B. einen Topf) zur Aufnahme von ein oder mehreren Zutaten für ein Nahrungsmittel. Der Behälter kann z.B. ein Aufnahmevolumen zwischen 1 und 5 Litern aufweisen. Der Behälter kann aus einem Kunststoff oder aus einem Metall gefertigt sein.

Des Weiteren umfasst das Küchengerät typischerweise eine Benutzerschnittstelle, mit zumindest einem Bedienelement (z.B. einer Taste) und zumindest einem Ausgabeelement (z.B. einem Bildschirm). Die Benutzerschnittstelle kann es einem Nutzer ermöglichen, eine Nutzereingabe an dem Küchengerät zu tätigen (z.B. um das Küchengerät zu steuern). Des Weiteren kann über die Benutzerschnittstelle eine Rückmeldung bzw. Ausgabe an einen Nutzer erfolgen.

Außerdem umfasst das Küchengerät einen Aktor (insbesondere einen elektrischen Motor) zum Antrieb eines (insbesondere austauschbaren) Werkzeugs, mit dem ein oder mehrere Zutaten für ein Nahrungsmittel bearbeitet werden können. Das Küchengerät kann ausgebildet sein, selektiv mit einem Werkzeug aus einer Mehrzahl von unterschiedlichen Werkzeugen betrieben zu werden. Beispielhafte Werkzeuge sind: ein Schlagbesen, eine Raspelscheibe, ein Messer, ein Rührwerkzeug, etc. Der Aktor kann typischerweise mit unterschiedlichen Werten von ein oder mehreren Betriebsparametern des Aktors betrieben werden. Ein beispielhafter Betriebsparameter des Aktors ist die Drehzahl des Aktors.

Des Weiteren umfasst das Küchengerät eine Temperierungseinheit zur Temperierung des Behälters. Die Temperierungseinheit kann insbesondere dazu verwendet werden, ein Nahrungsmittel in dem Behälter zu garen. Die Temperierungseinheit kann typischerweise mit unterschiedlichen Werten von ein oder mehreren Betriebsparametern betrieben werden. Ein beispielhafter Betriebsparameter der Temperierungseinheit ist die Temperatur (z.B. die Temperatur des Behälters).

Das Küchengerät umfasst ferner eine Steuereinheit (z.B. einen Mikroprozessor), die eingerichtet ist, zu bestimmen, ob ein Werkzeug und ggf. (d.h. gegebenenfalls) welches Werkzeug an den Aktor angeschlossen ist.

Beispielsweise kann auf Basis einer Nutzereingabe bestimmt werden, ob ein Werkzeug und ggf. welches Werkzeug an den Aktor angeschlossen ist. Zu diesem Zweck kann über die Benutzerschnittstelle eine Aufforderung an einen Nutzer des Küchengeräts ausgegeben werden, anzugeben, ob ein Werkzeug und ggf. welches Werkzeug an den Aktor angeschlossen ist. Die Nutzereingabe kann dann in Reaktion auf die Aufforderung erfolgen. Dabei kann bei der Aufforderung eine List von möglichen Werkzeugen angezeigt werden, aus der der Nutzer keinen oder einen Eintrag auswählen kann, um die Nutzereingabe zu tätigen.

Alternativ oder ergänzend kann das Küchengerät einen Sensor umfassen, der ausgebildet ist, Sensordaten bereitzustellen, die anzeigen, ob ein Werkzeug und ggf. welches Werkzeug an den Aktor angeschlossen ist. Der Sensor kann z.B. an einer Kupplungsstelle zwischen dem Aktor und einem Werkzeug angeordnet sein. Die Steuereinheit kann dann auf Basis der Sensordaten automatisch bestimmen, ob ein Werkzeug und ggf. welches Werkzeug an den Aktor angeschlossen ist.

Alternativ oder ergänzend kann die Steuereinheit eingerichtet sein, Rezeptdaten in Bezug auf ein unter Verwendung des Küchengeräts herzustellendes Nahrungsmittel zu ermitteln. Beispielsweise können die Rezeptdaten dazu genutzt werden, einen Nutzer des Küchengeräts durch den Herstellungsprozess eines Nahrungsmittels zu führen. Die Rezeptdaten können zu diesem Zweck zumindest einen Verarbeitungsschritt zur Herstellung des Nahrungsmittels anzeigen, bei dem der Aktor und/oder die Temperierungseinheit betrieben werden. Die Steuereinheit kann dann in automatischer Weise auf Basis der Rezeptdaten bestimmen, ob ein Werkzeug und ggf. welches Werkzeug an den Aktor angeschlossen ist.

Die Steuereinheit kann ferner eingerichtet sein, in Abhängigkeit von dem angeschlossenen Werkzeug einen zulässigen Betriebsbereich für den Aktor und einen zulässigen Betriebsbereich für die Temperierungseinheit zu ermitteln. Insbesondere kann eine zulässige Betriebsbereichs-Kombination mit einem zulässigen Betriebsbereich für den Aktor und mit einem zulässigen Betriebsbereich für die Temperierungseinheit ermittelt werden.

Das Küchengerät kann z.B. für jeden der Mehrzahl von unterschiedlichen Werkzeugen jeweils einen vordefinierten zulässigen Betriebsbereich für den Aktor und einen vordefinierten zulässigen Betriebsbereich für die Temperierungseinheit umfassen, wobei sich die zulässigen Betriebsbereiche für unterschiedliche Werkzeuge zumindest teilweise voneinander unterscheiden. Insbesondere kann das Küchengerät für jeden der Mehrzahl von unterschiedlichen Werkzeugen eine vordefinierte Betriebsbereichs-Kombination umfassen, wobei sich die Betriebsbereichs-Kombinationen für unterschiedliche Werkzeuge zumindest teilweise voneinander unterscheiden. Die vordefinierten Betriebsbereiche können auf einer Speichereinheit des Küchengeräts gespeichert sein. Die Steuereinheit kann dann eingerichtet sein, einen vordefinierten zulässigen Betriebsbereich für den Aktor und einen vordefinierten zulässigen Betriebsbereich, insbesondere eine vordefinierte Betriebsbereichs-Kombination, in Abhängigkeit von dem angeschlossenen Werkzeug auszuwählen.

Die Steuereinheit kann ferner eingerichtet sein, das Küchengerät im Rahmen der zulässigen Betriebsbereiche für den Aktor und für die Temperierungseinheit, insbesondere im Rahmen der zulässigen Betriebsbereichs-Kombination, zu betreiben. Durch eine Werkzeug-abhängige Beschränkung des Betriebs des Aktors und/oder der Temperierungseinheit können ein sicherer und komfortabler Betrieb eines Küchengeräts ermöglicht werden.

Ein zulässiger Betriebsbereich für den Aktor und/oder für die Temperierungseinheit kann anzeigen, wie ein Betriebsparameter (z.B. die Drehzahl) des Aktors und/oder ein Betriebsparameter (z.B. die Temperatur) der Temperierungseinheit durch einen Nutzer eingestellt werden kann. Beispielsweise kann ein zulässiger Betriebsbereich anzeigen,
- ob ein Betriebsparameter stufenweise oder stufenlos eingestellt werden kann;
- eine Anzahl von Stufen, in denen ein Betriebsparameter eingestellt werden kann;
- einen maximal zulässigen Wert eines Betriebsparameters;
- einen minimal zulässigen Wert eines Betriebsparameters; und/oder
- ein oder mehrere auswählbare zeitliche Modulationen eines Wertes des Betriebsparameters.

Die unterschiedlichen zulässigen Betriebsbereiche für die unterschiedlichen Werkzeuge können sich zumindest teilweise in Bezug auf zumindest eines der o.g. Merkmale unterscheiden. So kann eine präzise Kontrolle des Betriebs eines Küchengeräts ermöglicht werden.

Der zulässige Betriebsbereich für den Aktor und der zulässige Betriebsbereich für die Temperierungseinheit können abhängig voneinander sein. Insbesondere kann der zulässige Wertebereich für einen Betriebsparameter des Aktors von einem ausgewählten Wert für einen Betriebsparameter der Temperierungseinheit abhängig sein (und/oder umgekehrt). Beispielsweise können der zulässige Betriebsbereich für den Aktor und der zulässige Betriebsbereich für die Temperierungseinheit durch ein Kennfeld beschrieben werden, das einen Zusammenhang zwischen ein oder mehreren zulässigen Werten eines Betriebsparameters des Aktors und ein oder mehreren zulässigen Werten eines Betriebsparameters der Temperierungseinheit anzeigt. Durch die Berücksichtigung von Abhängigkeiten zwischen dem Betrieb des Aktors und dem Betrieb der Temperierungseinheit können die Sicherheit und der Komfort eines Küchengeräts weiter erhöht werden.

Die Steuereinheit kann eingerichtet sein, über die Benutzerschnittstelle eine Nutzereingabe in Bezug auf einen Sollwert eines Betriebsparameters des Aktors und/oder der Temperierungseinheit zu erfassen. Insbesondere kann eine Nutzereingabe in Bezug auf eine Sollwert-Kombination mit einem Sollwert für einen Betriebsparameter (z.B. die Drehzahl) des Aktors und einem Sollwert für einen Betriebsparameter (z.B. die Temperatur) der Temperierungseinheit erfasst werden. Ein eingegebener Sollwert, insbesondere eine eingegebene Sollwert-Kombination, kann dann in Abhängigkeit von dem zulässigen Betriebsbereich des Aktors und/oder der Temperierungseinheit, insbesondere in Abhängigkeit von der zulässigen Betriebsbereichs-Kombination, angepasst bzw. modifiziert werden. So kann in zuverlässiger Weise gewährleistet werden, dass das Küchengerät im Rahmen der zulässigen Betriebsbereiche des Aktors und/oder der Temperierungseinheit betrieben wird. Es wird somit ein sicherer und komfortabler Betrieb des Küchengeräts ermöglicht.

Die Benutzerschnittstelle kann ein Ausgabeelement, insbesondere einen Bildschirm, umfassen. Die Steuereinheit kann eingerichtet sein, Information in Bezug auf den zulässigen Betriebsbereich des Aktors und/oder den zulässigen Betriebsbereich der Temperierungseinheit und/oder der zulässigen Betriebsbereichs-Kombination über das Ausgabeelement auszugeben. So kann in zuverlässiger Weise bewirkt werden, dass das Küchengerät im Rahmen der zulässigen Betriebsbereiche des Aktors und/oder der Temperierungseinheit betrieben wird. Es wird somit ein sicherer und komfortabler Betrieb des Küchengeräts ermöglicht.

Gemäß einem weiteren Aspekt der Erfindung wird ein weiteres Küchengerät beschrieben. Die in diesem Dokument beschriebenen Merkmale sind auch auf dieses Küchengerät anwendbar.

Die Steuereinheit des Küchengeräts kann eingerichtet sein, über die Benutzerschnittstelle des Küchengeräts eine Nutzereingabe in Bezug auf eine Sollwert-Kombination mit einem Sollwert für einen Betriebsparameter (z.B. die Drehzahl) des Aktors und mit einem Sollwert für einen Betriebsparameter (z.B. die Temperatur) der Temperierungseinheit zu erfassen. Des Weiteren kann die Steuereinheit eingerichtet sein, die Sollwert-Kombination derart zu modifizieren, dass die modifizierte Sollwert-Kombination in den Rahmen einer zulässigen Betriebsbereichs-Kombination aus einem zulässigen Betriebsbereich für den Aktor und einem zulässigen Betriebsbereich für die Temperierungseinheit fällt. Dabei kann die zulässige Betriebsbereichs-Kombination ein Kennfeld umfassen, das einen Zusammenhang zwischen ein oder mehreren zulässigen Werten des Betriebsparameters des Aktors und ein oder mehreren zulässigen Werten des Betriebsparameters der Temperierungseinheit anzeigt. Die eingegebene Sollwert-Kombination kann dann auf das Kennfeld projiziert werden, um die modifizierte Sollwert-Kombination zu ermitteln.

Das Küchengerät kann in Abhängigkeit von der modifizierten Sollwert-Kombination betrieben werden. So kann ein sicherer und komfortabler Betrieb eines Küchengeräts ermöglicht werden.

Gemäß einem weiteren Aspekt der Erfindung wird ein weiteres Küchengerät beschrieben. Die in diesem Dokument beschriebenen Merkmale sind auch auf dieses Küchengerät anwendbar.

Das Küchengerät umfasst einen Behälter zur Aufnahme von ein oder mehreren Zutaten für ein Nahrungsmittel, einen Aktor zum Antrieb eines Werkzeugs, sowie eine Temperierungseinheit zur Temperierung des Behälters. Der Aktor weist einen einstellbaren ersten Betriebsparameter (z.B. die Drehzahl) und die Temperierungseinheit weist einen einstellbaren zweiten Betriebsparameter (z.B. die Temperatur) auf. Alternativ weist der Aktor einen einstellbaren zweiten Betriebsparameter (z.B. die Drehzahl) und die Temperierungseinheit weist einen einstellbaren ersten Betriebsparameter (z.B. die Temperatur) auf.

Die Steuereinheit kann eingerichtet sein, einen Soll- und/oder Istwert des ersten Betriebsparameters zu ermitteln. Des Weiteren kann die Steuereinheit eingerichtet sein, über die Benutzerschnittstelle eine Nutzereingabe in Bezug auf einen Sollwert des zweiten Betriebsparameters zu erfassen, wobei der Sollwert des zweiten Betriebsparameters auf einen zulässigen Wertebereich beschränkt ist bzw. wird. Dabei hängt der zulässige Wertebereich von dem Soll- und/oder Istwert des ersten Betriebsparameters ab. Der zulässige Wertebereich umfasst einen zulässigen Minimalwert und einen zulässigen Maximalwert, die unterschiedlich voneinander sind. Der Sollwert des zweiten Betriebsparameters kann dann (nur) im Rahmen des zulässigen Wertebereichs ausgewählt bzw. eingestellt werden. So kann ein sicherer und komfortabler Betrieb eines Küchengeräts ermöglicht werden.

Gemäß einem weiteren Aspekt der Erfindung werden Verfahren für den Betrieb eines Küchengeräts beschrieben. Die Verfahren weisen entsprechende Merkmale zu den Merkmalen der in diesem Dokument beschriebenen Steuereinheit auf.

Es ist zu beachten, dass jegliche Aspekte des in diesem Dokument beschriebenen Küchengeräts und/oder der in diesem Dokument beschriebenen Verfahren in vielfältiger Weise miteinander kombiniert werden können. Insbesondere können die Merkmale der Patentansprüche in vielfältiger Weise miteinander kombiniert werden.

Im Weiteren wird die Erfindung anhand von in der beigefügten Zeichnung dargestellten Ausführungsbeispielen näher beschrieben. Dabei zeigen
- Figur 1: ein beispielhaftes Küchengerät in einer Seitenansicht;
- Figur 2: ein Ablaufdiagramm eines beispielhaften Verfahrens zum Betrieb eines Küchengeräts;
- Figur 3: ein Ablaufdiagramm eines weiteren beispielhaften Verfahrens zum Betrieb eines Küchengeräts;
- Figur 4: ein beispielhaftes Drehzahl-Temperatur-Kennfeld; und
- Figur 5: ein Ablaufdiagramm eines weiteren beispielhaften Verfahrens zum Betrieb eines Küchengeräts.

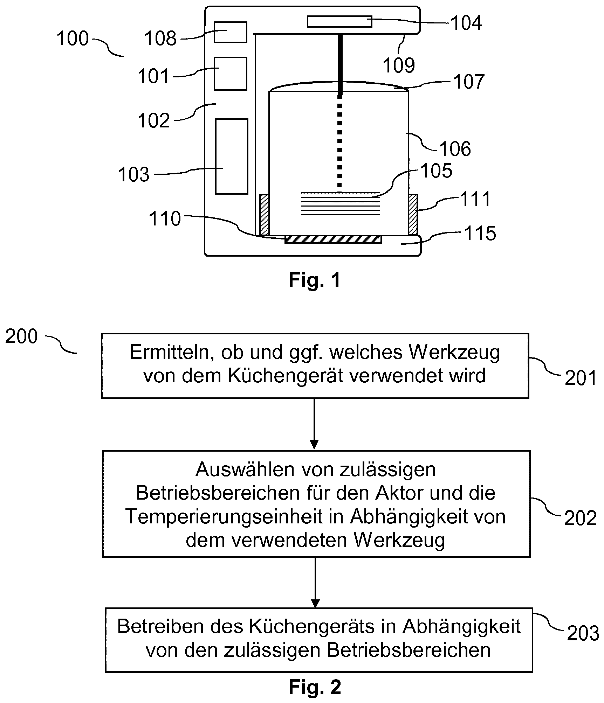

Wie eingangs dargelegt, befasst sich das vorliegende Dokument mit der Erhöhung des Komforts und/oder der Sicherheit des Betriebs eines Küchengeräts. In diesem Zusammenhang zeigt Fig. 1 ein beispielhaftes Küchengerät 100, insbesondere eine beispielhafte Küchenmaschine. Das Küchengerät 100 umfasst ein Gehäuse 102, in bzw. an dem ein (typischerweise herausnehmbarer) Behälter 106 angeordnet werden kann, der ggf. mit einer (transparenten) Abdeckung 107 abgedeckt werden kann. In dem Behälter 106 können Nahrungsmittel verarbeitet werden, z.B. zerkleinert, geknetet und/oder gegart werden. Die Abdeckung 107 kann es einem Nutzer ermöglichen, den Fortschritt der Verarbeitung eines Nahrungsmittels in dem Behälter 106 zu beobachten. Des Weiteren kann die Abdeckung 107 als Spritzschutz dienen.

Das Küchengerät 100 kann ein oder mehrere Verarbeitungskomponenten 104, 105, 111 zur Verarbeitung eines (flüssigen und/oder festen) Nahrungsmittels umfassen. Beispielhafte Verarbeitungskomponenten 104, 105, 111 sind
- ein Aktor 104, insbesondere ein (elektrischer) Motor, zum Antrieb von ein oder mehreren unterschiedlichen Verarbeitungsaufsätzen bzw. Werkzeugen 105 (z.B. einem Messer, einem Knethaken, einer Raspel, etc.); die Verarbeitungsaufsätze bzw. Werkzeuge 105 können z.B. an einem Schwenkarm 109 des Küchengeräts 100 mit dem Aktor 104 gekoppelt werden bzw. gekoppelt sein; und/oder
- eine Temperierungseinheit 111 (z.B. ein Heiz- oder ein Kühlelement) zur Temperierung des Behälters 106.

Ein Küchengerät 100 kann somit eingerichtet sein, ein flüssiges, viskoses und/oder festes Nahrungsmittel zu mixen, zu zerkleinern, zu erwärmen, zu garen, zu kühlen, zu raspeln, zu kneten, zu mischen, etc. Das Küchengerät 100 kann auch ein Blender oder eine Küchenmaschine mit Garfunktion sein.

Das Küchengerät 100 kann ferner eine Benutzerschnittstelle 103 (z.B. mit ein oder mehreren Bedienelementen, wie z.B. Schalter bzw. Knöpfe, und/oder mit ein oder mehreren Ausgabeelementen, wie z.B. einem (ggf. berührungsempfindlichen) Bildschirm) umfassen, mit der die Verarbeitungskomponenten 104, 105, 111 des Küchengeräts 100 durch einen Nutzer eingestellt werden können. Beispielsweise können eine Rotationsgeschwindigkeit bzw. eine Drehzahl des Motors 104 und/oder eine Temperatur der Temperierungseinheit 111 eingestellt werden.

Das Küchengerät 100 umfasst typischerweise eine Steuereinheit 101, die eingerichtet ist, die ein oder mehreren Verarbeitungskomponenten 104, 105, 111 des Küchengeräts 100 in Abhängigkeit von einer Eingabe eines Nutzers an der Benutzerschnittstelle 103 zu steuern. Außerdem kann das Küchengerät 100 eine Kommunikationseinheit 108 (z.B. eine drahtlose Kommunikationsschnittstelle, etwa WLAN, oder eine USB Schnittstelle) umfassen, über die dem Küchengerät 100 Information bereitgestellt werden kann. Das Küchengerät 100 kann ferner ein Wiegeelement 110 umfassen, das z.B. an einer Basis 115 des Küchengeräts 100 angeordnet ist, und das eingerichtet ist, Gewichtsdaten in Bezug auf das Gewicht des Behälters 106 zu erfassen.

Wie oben dargelegt, kann ein Küchengerät 100 ggf. mit unterschiedlichen Verarbeitungsaufsätzen bzw. Werkzeugen 105 betrieben werden. Des Weiteren kann ein Küchengerät 100 eine Temperierungseinheit 111 aufweisen, die mit unterschiedlichen (Soll-) Temperaturen betrieben werden kann. Die zulässigen Bereiche für die Verarbeitungsstufe bzw. Drehzahl eines Werkzeuges 105 und für die Temperatur der Temperierungseinheit 111 können voneinander abhängig sein. Insbesondere kann es vorteilhaft sein, dass je nach eingestellter Temperatur, die maximal einstellbare Drehzahl eines Werkzeuges 105 begrenzt wird, oder dass je nach eingestellter Drehzahl, die maximal einstellbare Temperatur begrenzt wird. So kann ein sicherer und zuverlässiger Betrieb eines Küchengeräts 100 ermöglicht werden. Des Weiteren kann so die Qualität der hergestellten Nahrungsmittel erhöht werden.

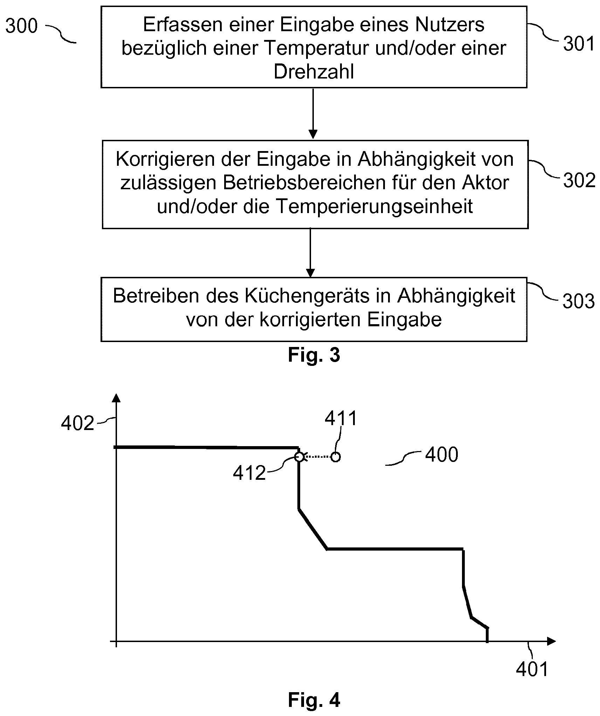

Das Küchengerät 100 kann zumindest ein Kennfeld 400 aufweisen (siehe Fig. 4), das einen Zusammenhang zwischen der Temperatur 401 der Temperierungseinheit 111 und der Drehzahl 402 des Aktors 104 des Werkzeugs 105 des Küchengeräts 100 definiert. Dabei können für unterschiedliche Werkzeuge 105 unterschiedliche Kennfelder 400 definiert werden. Insbesondere kann ein Kennfeld 400 die für eine eingestellte Temperatur 401 maximal mögliche Drehzahl 402 und/oder die für eine eingestellte Drehzahl 402 maximal mögliche Temperatur 401 anzeigen.

Die Steuereinheit 101 kann eingerichtet sein, zu ermitteln, ob und ggf. welches Werkzeug 105 an den Aktor 104 des Küchengeräts 100 angeschlossen ist. Beispielsweise kann über die Benutzerschnittstelle 103 abgefragt werden, welches Werkzeug 105 ein Nutzer benutzen möchte. Alternativ oder ergänzend kann das Küchengerät 100 einen Sensor aufweisen (nicht dargestellt), der eingerichtet ist, automatisch zu erkennen, welches Werkzeug 105 an den Aktor 104 des Küchengeräts 100 angeschlossen ist. Alternativ oder ergänzend kann auf Basis von Rezeptdaten in Bezug auf ein Nahrungsmittel, das mit dem Küchengerät 100 zubereitet wird, automatisch ermittelt werden, welches Werkzeug 105 (für den nächsten Verarbeitungsschritt zur Herstellung des Nahrungsmittels) an dem Küchengerät 100 angeschlossen sein sollte.

Es kann dann auf Basis des ermittelten Werkzeugs 105 ein Werkzeug-abhängiges Kennfeld 400 ausgewählt werden. Der Betrieb des Küchengeräts 100 kann dann in Abhängigkeit von dem ausgewählten Kennfeld 400 erfolgen. Insbesondere können die Einstellmöglichkeiten des Nutzers in Abhängigkeit von dem Kennfeld 400 begrenzt und/oder korrigiert werden. Des Weiteren kann gewährleistet werden, dass der Aktor 104 und die Temperierungseinheit 111 nur innerhalb des ausgewählten Kennfelds 400 betrieben werden. Ein Kennfeld kann somit einen zulässigen Betriebsbereich für den Aktor 104 und für die Temperierungseinheit 111 definieren.

Es kann somit einem Nutzer eines Küchengeräts 100 in Abhängigkeit eines ausgewählten und/oder verwendeten Werkzeuges 105, eine Werkzeug-abhängige Skala 400 zur Ver- bzw. Einstellung von Drehzahl 402 und Temperatur 401 angeboten werden. Tabelle 1 stellt beispielhafte Skalen bzw. Kennfelder 400 bzw. zulässige Betriebsbereich für unterschiedliche Werkzeuge 105 dar.

**Tabelle 1**

| Werkzeug | Drehzahlbereich | Temperaturbereich |
|---|---|---|
| Kein Werkzeug | Es kann keine Drehzahl eingestellt werden (maximal zulässige Drehzahlstufe "0"). | Es können (z.B. in 20 Stufen) Temperaturen zwischen einer ersten Minimalbis zu einer ersten Maximaltemperatur (z.B. 35°C bis 200°C) eingestellt werden. |
| Rührwerkzeug | Die Drehzahl ist auf einen bestimmten Wert fixiert. Aber es kann ein Intervallbetrieb eingestellt werden (z.B. mit 5 unterschiedlich langen Intervallen). Es kann somit eine zeitliche Modulation der Drehzahl erfolgen. | Es können (z.B. in 20 Stufen) Temperaturen zwischen einer zweiten Minimalbis zu einer zweiten Maximaltemperatur (z.B. 50°C bis 200°C) eingestellt werden. |
| Messer | Die Drehzahl kann zwischen einer ersten Minimaldrehzahl (z.B. 60 Umdrehungen pro Minute (rpm)) und einer ersten Maximaldrehzahl (z.B. 1800rpm) eingestellt werden. | Es können (z.B. in 20 Stufen) Temperaturen zwischen einer dritten Minimalbis zu einer dritten Maximaltemperatur (z.B. 70°C bis 200°C) eingestellt werden. |
| Raspelscheibe | Die Drehzahl kann z.B. stufenweise (z.B. in 5 Stufen) eingestellt werden. | Es kann keine Temperatur eingestellt werden. |
| Schlagbesen | Die Drehzahl kann z.B. stufenweise (z.B. in 3 Stufen) eingestellt werden. | Die Temperatur kann z.B. stufenweise (z.B. in 3 Stufen) zwischen einer vierten Minimalbis zu einer vierten Maximaltemperatur (z.B. 35°C bis 50°C) eingestellt werden. |

Während des Betrieb des Küchengeräts 100 kann z.B. die maximal mögliche und/oder einstellbare Drehzahl 402 in Abhängigkeit von der aktuellen Temperatur 401 des Behälters bzw. Topfes 106 begrenzt werden. Beispielsweise kann bei einer Topftemperatur > 100°C das Einstellen einer Drehzahl > 200rpm unterbunden werden. Bei 60°C < Topftemperatur <= 100°C kann ggf. ein Einstellen einer Drehzahl > 500rpm unterbunden werden. Andererseits kann ggf. bei Topftemperatur <= 60°C die einstellbare Drehzahl 402 nicht beschränkt sein (nur auf die maximal mögliche Drehzahl 402 des Aktors 104). Es können somit ggf. nur bestimmte Kombinationen aus Drehzahl 402 und Temperatur 401 zugelassen sein.

Beispielsweise kann während der Eingabe einer Temperatur 401 und/oder einer Drehzahl 402 durch die Steuereinheit 101 überprüft werden, ob die von einem Nutzer gewählte Kombination aus Temperatur 401 und Drehzahl 402 zulässig ist. Fig. 4 zeigt eine beispielhafte Eingabe 411 eines Nutzers, die außerhalb des (Werkzeug-abhängigen) Kennfelds 400 bzw. außerhalb des zulässigen Betriebsbereichs liegt. Die Eingabe 411 kann dann automatisch durch das Küchengerät 100 korrigiert werden. Insbesondere kann die Eingabe 411 eines Nutzers auf einen zulässigen Punkt 412 des Kennfelds 400 projiziert werden. Zu diesem Zweck können die Temperatur 401 und/oder die Drehzahl 402 abweichend von der Eingabe 411 des Nutzers modifiziert, insbesondere reduziert, werden.

Beispielsweise kann ein Nutzer die Zieldrehzahl auf 1200rpm und anschließend die Temperatur auf 150°C einstellen. Es kann dann überprüft werden, ob diese Kombination zulässig ist. Wenn nicht, so kann das Küchengerät 100 ggf. automatisch die Zieldrehzahl auf 1000rpm reduzieren. Durch die automatische Korrektur einer Nutzereingabe 411 kann ein sicherer und zuverlässiger Betrieb eines Küchengeräts 100 ermöglicht werden.

Fig. 2 zeigt ein Ablaufdiagramm eines beispielhaften Verfahrens 200 zum Betrieb eines Küchengeräts 100. Das Küchengerät 100 umfasst einen Aktor 104 zum Antrieb eines austauschbaren Werkzeugs 105, mit dem ein Nahrungsmittel in einem Behälter 106 bearbeitet werden kann. Des Weiteren umfasst das Küchengerät 100 eine Temperierungseinheit 111 zur Temperierung des Behälters 106. Das Verfahren 200 kann durch eine Steuereinheit 101 des Küchengeräts 100 ausgeführt werden. Die in diesem Dokument beschriebenen Merkmale sind auch für das Verfahren 200 anwendbar.

Das Verfahren 200 umfasst das Bestimmen 201, ob ein Werkzeug 105 und ggf. welches Werkzeug 105 (aus einer definierten Mehrzahl von unterschiedlichen Werkzeugen 105) an den Aktor 104 angeschlossen ist. Beispielhafte Werkzeuge 105 sind ein Messer, ein Rührwerkzeug, eine Raspelscheibe, ein Schlagbesen, etc. Beispielsweise kann auf Basis einer Nutzereingabe bestimmt 201 werden, ob und ggf. welches Werkzeug 105 von einem Nutzer an den Aktor 104 angeschlossen wurde.

Außerdem umfasst das Verfahren 200 das Ermitteln 202 eines zulässigen Betriebsbereichs für den Aktor 104 und eines zulässigen Betriebsbereichs für die Temperierungseinheit 111, insbesondere das Ermitteln 202 einer zulässigen Betriebsbereichs-Kombination mit einem zulässigen Betriebsbereich für den Aktor 104 und einem zulässigen Betriebsbereich für die Temperierungseinheit 111, in Abhängigkeit von dem angeschlossenen Werkzeug 105.

Des Weiteren umfasst das Verfahren 200 das Betreiben 203 des Küchengeräts 100 im Rahmen der zulässigen Betriebsbereiche für den Aktor 104 und für die Temperierungseinheit 111, insbesondere im Rahmen der zulässigen Betriebsbereichs-Kombination.

Es können somit für unterschiedliche Werkzeuge 105 unterschiedliche zulässige Betriebsbereiche, insbesondere unterschiedliche Kombinationen von Betriebsbereichen, für den Aktor 104 und für die Temperierungseinheit 111 festgelegt und während des Betriebs des Küchengeräts 100 eingehalten werden. So kann ein sicherer und komfortabler Betrieb des Küchengeräts 100 ermöglicht werden.

Fig. 3 zeigt ein Ablaufdiagramm eines beispielhaften Verfahrens 300 zum Betrieb eines Küchengeräts 100. Das Küchengerät 100 umfasst einen Aktor 104 zum Antrieb eines austauschbaren Werkzeugs 105, mit dem ein Nahrungsmittel in einem Behälter 106 bearbeitet werden kann. Des Weiteren umfasst das Küchengerät 100 eine Temperierungseinheit 111 zur Temperierung des Behälters 106. Das Verfahren 300 kann durch eine Steuereinheit 101 des Küchengeräts 100 ausgeführt werden. Die in diesem Dokument beschriebenen Merkmale sind auch für das Verfahren 300 anwendbar.

Das Verfahren 300 umfasst das Erfassen 301 einer Nutzereingabe in Bezug auf eine Sollwert-Kombination mit einem Sollwert für einen Betriebsparameter 402 (insbesondere die Drehzahl) des Aktors 104 und einem Sollwert für einen Betriebsparameter 401 (insbesondere die Temperatur) der Temperierungseinheit 111. Außerdem umfasst das Verfahren 300 das Modifizieren 302 der Sollwert-Kombination derart, dass die modifizierte Sollwert-Kombination in den Rahmen bzw. in den Bereich einer zulässigen Betriebsbereichs-Kombination aus einem zulässigen Betriebsbereich für den Aktor 104 und einem zulässigen Betriebsbereich für die Temperierungseinheit 111 fällt. Insbesondere können die jeweiligen Sollwerte modifiziert werden, um modifizierte Sollwerte bereitzustellen, die in dem jeweiligen zulässigen Betriebsbereich vorgesehen sind.

Ferner umfasst das Verfahren 300 das Betreiben 303 des Küchengeräts 100 in Abhängigkeit von der modifizierten Sollwert-Kombination. Durch die automatische Anpassung der eingegebenen Sollwerte kann ein sicherer und komfortabler Betrieb des Küchengeräts 100 ermöglicht werden.

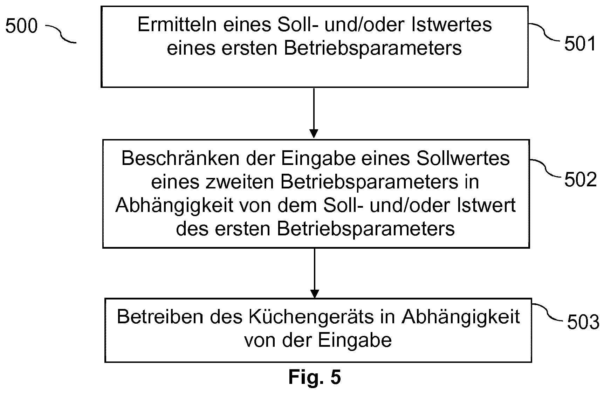

Fig. 5 zeigt ein Ablaufdiagramm eines beispielhaften Verfahrens 500 zum Betrieb eines Küchengeräts 100. Das Küchengerät 100 umfasst einen Aktor 104 zum Antrieb eines austauschbaren Werkzeugs 105, mit dem ein Nahrungsmittel in einem Behälter 106 bearbeitet werden kann. Des Weiteren umfasst das Küchengerät 100 eine Temperierungseinheit 111 zur Temperierung des Behälters 106. Das Verfahren 500 kann durch eine Steuereinheit 101 des Küchengeräts 100 ausgeführt werden. Die in diesem Dokument beschriebenen Merkmale sind auch für das Verfahren 500 anwendbar.

Der Aktor 104 weist einen einstellbaren ersten Betriebsparameter und die Temperierungseinheit 111 einen einstellbaren zweiten Betriebsparameter auf. Alternativ weist der Aktor 104 einen einstellbaren zweiten Betriebsparameter und die Temperierungseinheit 111 einen einstellbaren ersten Betriebsparameter auf. Insbesondere kann der erste Betriebsparameter die Drehzahl des Aktors 104 und der zweite Betriebsparameter kann die Temperatur der Temperierungseinheit 111 sein. Alternativ kann der zweite Betriebsparameter die Drehzahl des Aktors 104 und der erste Betriebsparameter kann die Temperatur der Temperierungseinheit 111 sein.

Das Verfahren 500 umfasst das Ermitteln 501 eines Soll- und/oder Istwertes des ersten Betriebsparameters. Des Weiteren umfasst das Verfahren 500 das Erfassen 502 einer Nutzereingabe in Bezug auf einen Sollwert des zweiten Betriebsparameters. Dabei kann der durch einen Nutzer eingegebene Sollwert des zweiten Betriebsparameters auf einen zulässigen Wertebereich beschränkt sein bzw. werden, wobei der zulässige Wertebereich von dem Soll- und/oder Istwert des ersten Betriebsparameters abhängt und wobei der zulässige Wertebereich einen zulässigen Minimalwert und einen zulässigen Maximalwert umfasst, die unterschiedlich sind. Somit kann die Eingabe eines Sollwertes für den zweiten Betriebsparameter abhängig von dem Soll- und/oder Istwert des ersten Betriebsparameters beschränkt werden.

Das Verfahren 500 umfasst ferner das Betreiben 503 des Küchengeräts 100 in Abhängigkeit von der (beschränkten) Nutzereingabe. Durch die Beschränkung der Nutzereingabe in Abhängigkeit von dem Soll- und/oder Istwert des ersten Betriebsparameters kann ein sicherer und komfortabler Betrieb des Küchengeräts 100 ermöglicht werden.

In diesem Dokument wird somit ein Küchengerät 100 beschrieben, das ausgebildet ist, einem Nutzer nur die Einstellmöglichkeiten anzubieten, die für ein ausgewähltes Werkzeug 105 sinnvoll bzw. möglich sind. Durch die beschriebenen Maßnahmen kann die Wahrscheinlichkeit reduziert werden, dass ein Küchengerät 100 durch Fehlbedienung beschädigt wird und/oder dass durch Fehlbedienung ein Nahrungsmittel mit reduzierter Qualität hergestellt wird. Des Weiteren können durch die beschriebenen Maßnahmen Nutzereingaben beschleunigt werden, da über die Benutzerschnittstelle 103 ggf. nur die Betriebsparameter 401, 402 und/oder Einstell- bzw. Betriebsbereiche angezeigt werden, die für den jeweiligen Anwendungsfall relevant sind. Außerdem kann durch die Werkzeug-abhängige Beschränkung von Einstellmöglichkeiten ein sicherer Betrieb eines Küchengeräts 100 ermöglicht werden (z.B. kann das Herausspritzen von einem heißen Nahrungsmittel aus dem Behälter 106 des Küchengeräts 100 zuverlässig vermieden werden). Die unterschiedlichen Wertebereiche bzw. Kennfelder 400 für Drehzahl 402 und/oder Temperatur 401 können ggf. als unterschiedliche Skalen dargestellt werden (ggf. mit unterschiedlichen Beschriftungen, Markierungen, etc.) und ermöglichen es somit einem Nutzer auf einen Blick zu sehen, ob das richtige Werkzeug 105 für den Betrieb des Küchengeräts 100 ausgewählt wurde.

Die vorliegende Erfindung ist nicht auf die gezeigten Ausführungsbeispiele beschränkt. Insbesondere ist zu beachten, dass die Beschreibung und die Figuren nur das Prinzip des vorgeschlagenen Küchengeräts und/oder der vorgeschlagenen Verfahren veranschaulichen sollen.

## Patentansprüche

1. Küchengerät (100), das umfasst,
- einen Behälter (106) zur Aufnahme von ein oder mehreren Zutaten für ein Nahrungsmittel;
- einen Aktor (104) zum Antrieb eines austauschbaren Werkzeugs (105), mit dem ein oder mehrere Zutaten für ein Nahrungsmittel bearbeitet werden können;
- eine Temperierungseinheit (111) zur Temperierung des Behälters (106); und
- eine Steuereinheit (101), die eingerichtet ist,
- zu bestimmen, ob ein Werkzeug (105) und ggf. welches Werkzeug (105) an den Aktor (104) angeschlossen ist;
- in Abhängigkeit davon, einen zulässigen Betriebsbereich für den Aktor (104) und einen zulässigen Betriebsbereich für die Temperierungseinheit (111) zu ermitteln; wobei der zulässige Betriebsbereich für den Aktor (104) und der zulässige Betriebsbereich für die Temperierungseinheit (111) abhängig voneinander sind; und
- das Küchengerät (100) im Rahmen der zulässigen Betriebsbereiche für den Aktor (104) und für die Temperierungseinheit (111) zu betreiben.

2. Küchengerät (100) gemäß Anspruch 1, wobei
- das Küchengerät (100) eine Benutzerschnittstelle (103) umfasst; und
- die Steuereinheit (101) eingerichtet ist,
- eine Nutzereingabe über die Benutzerschnittstelle (103) zu erfassen; und
- auf Basis der Nutzereingabe zu bestimmen, ob ein Werkzeug (105) und ggf. welches Werkzeug (105) an den Aktor (104) angeschlossen ist.

3. Küchengerät (100) gemäß einem der vorhergehenden Ansprüche, wobei
- das Küchengerät (100) ausgebildet ist, selektiv mit einem Werkzeug (105) aus einer Mehrzahl von unterschiedlichen Werkzeugen (105) betrieben zu werden;
- das Küchengerät (100) einen Sensor umfasst, der ausgebildet ist, Sensordaten bereitzustellen, die anzeigen, ob ein Werkzeug (105) und ggf. welches Werkzeug (105) an den Aktor (104) angeschlossen ist; und
- die Steuereinheit (101) eingerichtet ist, auf Basis der Sensordaten zu bestimmen, ob ein Werkzeug (105) und ggf. welches Werkzeug (105) an den Aktor (104) angeschlossen ist.

4. Küchengerät (100) gemäß einem der vorhergehenden Ansprüche, wobei
- die Steuereinheit (101) eingerichtet ist, Rezeptdaten in Bezug auf ein unter Verwendung des Küchengeräts (100) herzustellendes Nahrungsmittel zu ermitteln;
- die Rezeptdaten zumindest einen Verarbeitungsschritt zur Herstellung des Nahrungsmittels anzeigen, bei dem der Aktor (104) und/oder die Temperierungseinheit (111) betrieben werden; und
- die Steuereinheit (101) eingerichtet ist, auf Basis der Rezeptdaten zu bestimmen, ob ein Werkzeug (105) und ggf. welches Werkzeug (105) an den Aktor (104) angeschlossen ist.

5. Küchengerät (100) gemäß einem der vorhergehenden Ansprüche, wobei
- ein zulässiger Betriebsbereich für den Aktor (104) und/oder für die Temperierungseinheit (111) anzeigt, wie ein Betriebsparameter (402) des Aktors (104) und/oder ein Betriebsparameter (401) der Temperierungseinheit (111) eingestellt werden kann;
- der Betriebsparameter (402) des Aktors (104) insbesondere eine Drehzahl und der Betriebsparameter (401) der Temperierungseinheit (111) insbesondere eine Temperatur umfasst; und
- ein zulässiger Betriebsbereich anzeigt,
- ob der Betriebsparameter (401, 402) stufenweise oder stufenlos eingestellt werden kann;
- eine Anzahl von Stufen, in denen der Betriebsparameter (401, 402) eingestellt werden kann;
- einen maximal zulässigen Wert des Betriebsparameters (401, 402);
- einen minimal zulässigen Wert des Betriebsparameters (401, 402); und/oder
- ein oder mehrere auswählbare zeitliche Modulationen eines Wertes des Betriebsparameters (401, 402).

6. Küchengerät (100) gemäß einem der vorhergehenden Ansprüche, wobei
- der zulässige Betriebsbereich für den Aktor (104) und der zulässige Betriebsbereich für die Temperierungseinheit (111) durch ein Kennfeld (400) beschrieben werden, das einen Zusammenhang zwischen ein oder mehreren zulässigen Werten eines Betriebsparameters (402) des Aktors (104) und ein oder mehreren zulässigen Werten eines Betriebsparameters (401) der Temperierungseinheit (111) anzeigt.

7. Küchengerät (100) gemäß einem der vorhergehenden Ansprüche, wobei
- das Küchengerät (100) ausgebildet ist, selektiv mit einem Werkzeug (105) aus einer Mehrzahl von unterschiedlichen Werkzeugen (105) betrieben zu werden;
- das Küchengerät (100) für jeden der Mehrzahl von unterschiedlichen Werkzeugen (105) einen vordefinierten zulässigen Betriebsbereich für den Aktor (104) und einen vordefinierten zulässigen Betriebsbereich für die Temperierungseinheit (111) umfasst, die sich zumindest teilweise für unterschiedliche Werkzeuge (105) voneinander unterscheiden;
- das Küchengerät (100) für jeden der Mehrzahl von unterschiedlichen Werkzeugen (105) insbesondere eine vordefinierte Betriebsbereichs-Kombination umfasst, wobei sich die Betriebsbereichs-Kombinationen zumindest teilweise für unterschiedliche Werkzeuge (105) voneinander unterscheiden; und
- die Steuereinheit (101) eingerichtet ist, in Abhängigkeit von dem angeschlossenen Werkzeug (105) einen vordefinierten zulässigen Betriebsbereich für den Aktor (104) und einen vordefinierten zulässigen Betriebsbereich, insbesondere eine vordefinierte Betriebsbereichs-Kombination, auszuwählen.

8. Küchengerät (100) gemäß einem der vorhergehenden Ansprüche, wobei
- das Küchengerät (100) eine Benutzerschnittstelle (103) umfasst; und
- die Steuereinheit (101) eingerichtet ist,
- über die Benutzerschnittstelle (103) eine Nutzereingabe in Bezug auf einen Sollwert eines Betriebsparameters (401, 402) des Aktors (104) und/oder der Temperierungseinheit (111), insbesondere eine Sollwert-Kombination mit einem Sollwert für einen Betriebsparameter (402) des Aktors (104) und einem Sollwert für einen Betriebsparameter (401) der Temperierungseinheit (111), zu erfassen; und
- den Sollwert, insbesondere die Sollwert-Kombination, in Abhängigkeit von dem zulässigen Betriebsbereich des Aktors (104) und/oder der Temperierungseinheit (111) abzuändern.

9. Küchengerät (100) gemäß Anspruch 8, wobei die Steuereinheit (101) eingerichtet ist,
- die Sollwert-Kombination derart zu modifizieren, dass die modifizierte Sollwert-Kombination in den Rahmen einer zulässigen Betriebsbereichs-Kombination aus dem zulässigen Betriebsbereich für den Aktor (104) und dem zulässigen Betriebsbereich für die Temperierungseinheit (111) fällt; und
- das Küchengerät (100) in Abhängigkeit von der modifizierten Sollwert-Kombination zu betreiben.

10. Küchengerät (100) gemäß Anspruch 9, wobei
- die zulässige Betriebsbereichs-Kombination ein Kennfeld (400) umfasst, das einen Zusammenhang zwischen ein oder mehreren zulässigen Werten des Betriebsparameters (402) des Aktors (104) und ein oder mehreren zulässigen Werten des Betriebsparameters (401) der Temperierungseinheit (111) anzeigt; und
- die Steuereinheit (101) eingerichtet ist, die Sollwert-Kombination auf das Kennfeld (400) zu projizieren, um die modifizierte Sollwert-Kombination zu ermitteln.

11. Küchengerät (100) gemäß einem der vorhergehenden Ansprüche, wobei
- das Küchengerät (100) eine Benutzerschnittstelle (103) mit einem Ausgabeelement, insbesondere einem Bildschirm, umfasst; und
- die Steuereinheit (101) eingerichtet ist, Information in Bezug auf den zulässigen - Betriebsbereich des Aktors (104) und/oder den zulässigen Betriebsbereich der Temperierungseinheit (111) über das Ausgabeelement auszugeben.

12. Küchengerät (100) gemäß einem der vorhergehenden Ansprüche, wobei die Steuereinheit (101) eingerichtet ist,
- in Abhängigkeit davon, ob ein Werkzeug (105) und ggf. welches Werkzeug (105) an den Aktor (104) angeschlossen ist, eine zulässige Betriebsbereichs-Kombination mit einem zulässigen Betriebsbereich für den Aktor (104) und einem zulässigen Betriebsbereich für die Temperierungseinheit (111) zu ermitteln; und
- das Küchengerät (100) im Rahmen der zulässigen Betriebsbereichs-Kombination zu betreiben.

13. Küchengerät (100) gemäß einem der vorhergehenden Ansprüche, wobei
- der Aktor (104) einen einstellbaren ersten Betriebsparameter und die Temperierungseinheit (111) einen einstellbaren zweiten Betriebsparameter aufweisen; oder
- der Aktor (104) einen einstellbaren zweiten Betriebsparameter und die Temperierungseinheit (111) einen einstellbaren ersten Betriebsparameter aufweisen; und
- das Küchengerät (100) eine Benutzerschnittstelle (103) umfasst; und
- die Steuereinheit (101) eingerichtet ist,
- einen Soll- und/oder Istwert des ersten Betriebsparameters zu ermitteln;
- über die Benutzerschnittstelle (103) eine Nutzereingabe in Bezug auf einen Sollwert des zweiten Betriebsparameters zu erfassen; wobei der Sollwert des zweiten Betriebsparameters auf einen zulässigen Wertebereich beschränkt ist, der von dem Soll- und/oder Istwert des ersten Betriebsparameters abhängt; wobei der zulässige Wertebereich einen zulässigen Minimalwert und einen zulässigen Maximalwert umfasst, die unterschiedlich sind; und
- das Küchengerät (100) in Abhängigkeit von der Nutzereingabe zu betreiben.

14. Verfahren (200) zum Betrieb eines Küchengeräts (100), das einen Aktor (104) zum Antrieb eines austauschbaren Werkzeugs (105) umfasst, mit dem ein Nahrungsmittel in einem Behälter (106) bearbeitet werden kann, und das eine Temperierungseinheit (111) zur Temperierung des Behälters (106) umfasst; wobei das Verfahren (200) umfasst,
- Bestimmen (201), ob ein Werkzeug (105) und ggf. welches Werkzeug (105) an den Aktor (104) angeschlossen ist;
- in Abhängigkeit davon, Ermitteln (202) eines zulässigen Betriebsbereichs für den Aktor (104) und eines zulässigen Betriebsbereichs für die Temperierungseinheit (111); wobei der zulässige Betriebsbereich für den Aktor (104) und der zulässige Betriebsbereich für die Temperierungseinheit (111) abhängig voneinander sind; und
- Betreiben (203) des Küchengeräts (100) im Rahmen der zulässigen Betriebsbereiche für den Aktor (104) und für die Temperierungseinheit (111), insbesondere im Rahmen der zulässigen Betriebsbereichs-Kombination.

## Claims

1. Kitchen appliance (100), which comprises
- a container (106) for receiving one or more ingredients for a food;
- an actuator (104) for driving a replaceable tool (105), with which one or more ingredients for a food can be processed;
- a temperature-control unit (111) for controlling the temperature of the container (106); and
- a control unit (101) which is designed,
- to determine whether a tool (105) and possibly which tool (105) is connected to the actuator (104);
- as a function of this, to determine a permissible operating range for the actuator (104) and a permissible operating range for the temperature-control unit (111); wherein the permissible operating range for the actuator (104) and the permissible operating range for the temperature-control unit (111) are dependent on one another; and
- to operate the kitchen appliance (100) within the scope of the permissible operating ranges for the actuator (104) and for the temperature-control unit (111).

2. Kitchen appliance (100) according to claim 1, wherein
- the kitchen appliance (100) comprises a user interface (103); and
- the control unit (101) is designed
- to detect a user input by way of the user interface (103); and
- on the basis of the user input to determine whether a tool (105) and possibly which tool (105) is connected to the actuator (104).

3. Kitchen appliance (100) according to one of the preceding claims, wherein
- the kitchen appliance (100) is embodied to be operated selectively with a tool (105) from a plurality of different tools (105);
- the kitchen appliance (100) comprises a sensor, which is embodied to provide sensor data, which indicates whether a tool (105) and possibly which tool (105) is connected to the actuator (104); and
- the control unit (101) is designed to determine on the basis of the sensor data whether a tool (105) and possibly which tool (105) is connected to the actuator (104).

4. Kitchen appliance (100) according to one of the preceding claims, wherein
- the control unit (101) is designed to determine recipe data in respect of food to be produced using the kitchen appliance (100);
- the recipe data indicates at least one processing step for producing the food, in which the actuator (104) and/or the temperature-control unit (111) are operated; and
- the control unit (101) is designed to determine on the basis of the recipe data whether a tool (105) and possibly which tool (105) is connected to the actuator (104).

5. Kitchen appliance (100) according to one of the preceding claims, wherein
- a permissible operating range for the actuator (104) and/or for the temperature-control unit (111) indicates how an operating parameter (402) of the actuator (104) and/or an operating parameter (401) of the temperature-control unit (111) can be adjusted;
- the operating parameter (402) of the actuator (104) comprises in particular a rotational speed and the operating parameter (401) of the temperature-control unit (111) comprises in particular a temperature; and
- a permissible operating range indicates,
- whether the operating parameter (401, 402) can be adjusted gradually or continuously;
- a number of stages, in which the operating parameter (401, 402) can be adjusted;
- a maximum permissible value of the operating parameter (401, 402);
- a minimum permissible value of the operating parameter (401, 402); and/or
- one or more selectable temporal modulations of a value of the operating parameter (401, 402).

6. Kitchen appliance (100) according to one of the preceding claims, wherein
- the permissible operating range for the actuator (104) and the permissible operating range for the temperature-control unit (111) are described by a characteristic diagram (400), which indicates a connection between one or more permissible values of an operating parameter (402) of the actuator (104) and one or more permissible values of an operating parameter (401) of the temperature-control unit (111).

7. Kitchen appliance (100) according to one of the preceding claims, wherein
- the kitchen appliance (100) is embodied to be selectively operated with a tool (105) from a plurality of different tools (105);
- for each of the plurality of different tools (105), the kitchen appliance (100) comprises a predefined permissible operating range for the actuator (104) and a predefined permissible operating range for the temperature-control unit (111), said operating ranges differing from one another at least partially for different tools (105);
- the kitchen appliance (100) comprises in particular a predefined operating range combination for each of the plurality of different tools (105), wherein the operating range combinations differ from one another at least partially for different tools (105); and
- as a function of the connected tool (105), the control unit (101) is designed to select a predefined permissible operating range for the actuator (104) and a predefined permissible operating range, in particular a predefined operating range combination.

8. Kitchen appliance (100) according to one of the preceding claims, wherein
- the kitchen appliance (100) comprises a user interface (103); and
- the control unit (101) is designed,
- to detect, by way of the user interface (103), a user input in respect of a target value of an operating parameter (401, 402) of the actuator (104) and/or the temperature-control unit (111), in particular a target value combination with a target value for an operating parameter (402) of the actuator (104) and a target value for an operating parameter (401) of the temperature-control unit (111), and
- to amend the target value, in particular the target value combination, as a function of the permissible operating range of the actuator (104) and/or the temperature-control unit (111).

9. Kitchen appliance (100) according to claim 8, wherein the control unit (101) is designed,
- to modify the target value combination so that in the scope of a permissible operating range combination the modified target value combination comes from the permissible operating range for the actuator (104) and the permissible operating range for the temperature-control unit (111); and
- to operate the kitchen appliance (100) as a function of the modified target value combination.

10. Kitchen appliance (100) according to claim 9, wherein
- the permissible operating range combination comprises a characteristic diagram (400), which indicates an association between one or more permissible values of the operating parameter (402) of the actuator (104) and one or more permissible values of the operating parameter (401) of the temperature-control unit (111); and
- the control unit (101) is designed to project the target value combination onto the characteristic diagram (400) in order to determine the modified target value combination.

11. Kitchen appliance (100) according to one of the preceding claims, wherein
- the kitchen appliance (100) comprises a user interface (103) with an output element, in particular a monitor; and
- the control unit (101) is designed to output information relating to the permissible operating range of the actuator (104) and/or the permissible operating range of the temperature-control unit (111) by way of the output element.

12. Kitchen appliance (100) according to one of the preceding claims, wherein the control unit (101) is designed,
- to determine a permissible operating range combination with a permissible operating range for the actuator (104) and a permissible operating range for the temperature-control unit (111) as a function of whether a tool (105) and possibly which tool (105) is connected to the actuator (104), and
- to operate the kitchen appliance (100) within the scope of the permissible operating range combination.

13. Kitchen appliance (100) according to one of the preceding claims, wherein
- the actuator (104) has an adjustable first operating parameter and the temperature-control unit (111) has an adjustable second operating parameter; or
- the actuator (104) has an adjustable second operating parameter and the temperature-control unit (111) has an adjustable first operating parameter; and
- the kitchen appliance (100) comprises a user interface (103) and
- the control unit (101) is designed,
- to determine a target and/or actual value of the first operating parameter;
- to detect a user input in respect of a target value of the second operating parameter by way of the user interface (103); wherein the target value of the second operating parameter is restricted to a permissible value range, which depends on the target and/or actual value of the fist operating parameter, wherein the permissible value range comprises a permissible minimum value and a permissible maximum value which are different, and
- to operate the kitchen appliance (100) as a function of the user input.

14. Method (200) for operating a kitchen appliance (100), which comprises an actuator (104) for driving a replaceable tool (105), with which a food can be processed in a container (106), and which comprises a temperature-control unit (111) for controlling the temperature of the container (106), wherein the method (200) comprises,
- determining (201) whether a tool (105) and possibly which tool (105) is connected to the actuator (104);
- determining (202), as a function hereof, a permissible operating range for the actuator (104) and a permissible operating range for the temperature-control unit (111); wherein the permissible operating range for the actuator (104) and the permissible operating range for the temperature-control unit (111) differ from one another; and
- operating (203) the kitchen appliance (100) within the scope of the permissible operating ranges for the actuator (104) and for the temperature-control unit (111), in particular within the scope of the permissible operating range combination.

## Revendications

1. Appareil de cuisine (100), lequel comprend
- un récipient (106) destiné à recevoir un ou plusieurs ingrédients pour un aliment ;
- un actionneur (104) destiné à entraîner un outil (105) interchangeable à l'aide duquel un ou plusieurs ingrédients peuvent être transformés pour un aliment ;
- une unité de régulation de température (111) destinée à réguler la température du récipient (106) ; et
- une unité de commande (101) qui est configurée
- pour déterminer si un outil (105) et, le cas échéant, quel outil (105) est raccordé à l'actionneur (104) ;
- en fonction de cela, pour déterminer une plage de fonctionnement admissible pour l'actionneur (104) et une plage de fonctionnement admissible pour l'unité de régulation de température (111) ; dans lequel la plage de fonctionnement admissible pour l'actionneur (104) et la plage de fonctionnement admissible pour l'unité de régulation de température (111) sont dépendantes l'une de l'autre ; et
- pour faire fonctionner l'appareil de cuisine (100) dans le cadre des plages de fonctionnement admissibles pour l'actionneur (104) et pour l'unité de régulation de température (111).

2. Appareil de cuisine (100) selon la revendication 1, dans lequel
- l'appareil de cuisine (100) comprend une interface utilisateur (103) ; et
- l'unité de commande (101) est configurée
- pour détecter une entrée utilisateur par l'intermédiaire de l'interface utilisateur (103) ; et
- sur la base de l'entrée utilisateur, pour déterminer si un outil (105) et, le cas échéant, quel outil (105) est raccordé à l'actionneur (104).

3. Appareil de cuisine (100) selon l'une quelconque des revendications précédentes, dans lequel
- l'appareil de cuisine (100) est réalisé pour fonctionner sélectivement avec un outil (105) provenant d'une pluralité d'outils (105) différents ;
- l'appareil de cuisine (100) comprend un capteur qui est réalisé pour fournir des données de capteur lesquelles indiquent si un outil (105) et, le cas échéant, quel outil (105) est raccordé à l'actionneur (104) ; et
- l'unité de commande (101) est configurée pour déterminer sur la base des données de capteur si un outil (105) et, le cas échéant, quel outil (105) est raccordé à l'actionneur (104).

4. Appareil de cuisine (100) selon l'une quelconque des revendications précédentes, dans lequel
- l'unité de commande (101) est configurée pour déterminer des données de recette relatives à un aliment à réaliser en utilisant l'appareil de cuisine (100) ;
- les données de recette indiquent au moins une étape de transformation pour la réalisation de l'aliment, au cours de laquelle l'actionneur (104) et/ou l'unité de régulation de température (111) sont mis en fonctionnement ; et
- l'unité de commande (101) est configurée pour déterminer sur la base des données de recette si un outil (105) et, le cas échéant, quel outil (105) est raccordé à l'actionneur (104).

5. Appareil de cuisine (100) selon l'une quelconque des revendications précédentes, dans lequel
- une plage de fonctionnement admissible pour l'actionneur (104) et/ou pour l'unité de régulation de température (111) indique comment un paramètre de fonctionnement (402) de l'actionneur (104) et/ou un paramètre de fonctionnement (401) de l'unité de régulation de température (11) peut/peuvent être réglé(s) ;
- le paramètre de fonctionnement (402) de l'actionneur (104) comprend notamment une vitesse de rotation et le paramètre de fonctionnement (401) de l'unité de régulation de température (111) comprend notamment une température ; et
- une plage de fonctionnement admissible indique
- si le paramètre de fonctionnement (401, 402) peut être réglé progressivement ou de manière continue ;
- un nombre de grades sur lesquels le paramètre de fonctionnement (401, 402) peut être réglé ;
- une valeur maximale admissible du paramètre de fonctionnement (401, 402) ;
- une valeur minimale admissible du paramètre de fonctionnement (401, 402) ; et/ou
- une ou plusieurs modulations temporelles sélectionnables d'une valeur du paramètre de fonctionnement (401, 402).

6. Appareil de cuisine (100) selon l'une quelconque des revendications précédentes, dans lequel
- la plage de fonctionnement admissible pour l'actionneur (104) et la plage de fonctionnement admissible pour l'unité de régulation de température (111) sont décrites au moyen d'un diagramme caractéristique (400) qui indique une relation entre une ou plusieurs valeurs admissibles d'un paramètre de fonctionnement (402) de l'actionneur (104) et une ou plusieurs valeurs admissibles d'un paramètre de fonctionnement (401) de l'unité de régulation de température (111).

7. Appareil de cuisine (100) selon l'une quelconque des revendications précédentes, dans lequel
- l'appareil de cuisine (100) est réalisé pour fonctionner sélectivement avec un outil (105) provenant d'une pluralité d'outils (105) différents ;
- l'appareil de cuisine (100) comprend pour chacun de la pluralité des outils (105) différents une plage de fonctionnement admissible prédéfinie pour l'actionneur (104) et une plage de fonctionnement admissible prédéfinie pour l'unité de régulation de température (111), lesquelles se distinguent l'une de l'autre au moins en partie pour différents outils (105) ;
- l'appareil de cuisine (100) comprend pour chacun de la pluralité des outils (105) différents notamment une combinaison de plages de fonctionnement prédéfinie, les combinaisons de plages de fonctionnement se distinguant les unes des autres au moins en partie pour différents outils (105) ; et
- l'unité de commande (101) est configurée pour sélectionner une plage de fonctionnement admissible prédéfinie pour l'actionneur (104) et une plage de fonctionnement admissible prédéfinie, notamment une combinaison de plages de fonctionnement prédéfinie, en fonction de l'outil (105) raccordé.

8. Appareil de cuisine (100) selon l'une quelconque des revendications précédentes, dans lequel
- l'appareil de cuisine (100) comprend une interface utilisateur (103) ; et
- l'unité de commande (101) est configurée
- pour détecter, par l'intermédiaire de l'interface utilisateur (103), une entrée utilisateur relative à une valeur de consigne d'un paramètre de fonctionnement (401, 402) de l'actionneur (104) et/ou de l'unité de régulation de température (111), notamment une combinaison de valeurs de consigne comprenant une valeur de consigne pour un paramètre de fonctionnement (402) de l'actionneur (104) et une valeur de consigne pour un paramètre de fonctionnement (401) de l'unité de régulation de température (111) ; et
- pour modifier la valeur de consigne, notamment la combinaison de valeurs de consigne, en fonction de la plage de fonctionnement admissible de l'actionneur (104) et/ou de l'unité de régulation de température (111).

9. Appareil de cuisine (100) selon la revendication 8, dans lequel l'unité de commande (101) est configurée
- pour modifier la combinaison de valeurs de consigne de manière à ce que la combinaison de valeurs de consigne modifiée tombe dans le cadre d'une combinaison de plages de fonctionnement admissible provenant de la plage de fonctionnement admissible pour l'actionneur (104) et de la plage de fonctionnement admissible pour l'unité de régulation de température (111) ; et
- pour faire fonctionner l'appareil de cuisine (100) en fonction de la combinaison de valeurs de consigne modifiée.

10. Appareil de cuisine (100) selon la revendication 9, dans lequel
- la combinaison de plages de fonctionnement admissible comprend un diagramme caractéristique (400) qui indique une relation entre une ou plusieurs valeurs admissibles du paramètre de fonctionnement (402) de l'actionneur (104) et une ou plusieurs valeurs admissibles du paramètre de fonctionnement (401) de l'unité de régulation de température (111) ; et
- l'unité de commande (101) est configurée pour projeter la combinaison de valeurs de consigne sur le diagramme caractéristique (400) afin de déterminer la combinaison de valeurs de consigne modifiée.

11. Appareil de cuisine (100) selon l'une quelconque des revendications précédentes, dans lequel
- l'appareil de cuisine (100) comprend une interface utilisateur (103) dotée d'un élément de sortie, notamment d'un écran ; et
- l'unité de commande (101) est configurée pour sortir, par l'intermédiaire de l'élément de sortie, des informations relatives à la plage de fonctionnement admissible de l'actionneur (104) et/ou à la plage de fonctionnement admissible de l'unité de régulation de température (111).

12. Appareil de cuisine (100) selon l'une quelconque des revendications précédentes, dans lequel l'unité de commande (101) est configurée,
- en fonction du fait si un outil (105) et, le cas échéant, quel outil (105) est raccordé à l'actionneur (104), pour déterminer une combinaison de plages de fonctionnement admissible comprenant une plage de fonctionnement admissible pour l'actionneur (104) et une plage de fonctionnement admissible pour l'unité de régulation de température (111) ; et
- pour faire fonctionner l'appareil de cuisine (100) dans le cadre de la combinaison de plages de fonctionnement admissible.

13. Appareil de cuisine (100) selon l'une quelconque des revendications précédentes, dans lequel
- l'actionneur (104) présente un premier paramètre de fonctionnement réglable et l'unité de régulation de température (111) présente un deuxième paramètre de fonctionnement réglable ; ou
- l'actionneur (104) présente un deuxième paramètre de fonctionnement réglable et l'unité de régulation de température (111) présente un premier paramètre de fonctionnement réglable ; et
- l'appareil de cuisine (100) comprend une interface utilisateur (103) ; et
- l'unité de commande (101) est configurée
- pour déterminer une valeur de consigne et/ou une valeur réelle du premier paramètre de fonctionnement ;
- pour détecter par l'intermédiaire de l'interface utilisateur (103) une entrée utilisateur relative à une valeur de consigne du deuxième paramètre de fonctionnement ; dans lequel la valeur de consigne du deuxième paramètre de fonctionnement est limitée à une plage de valeurs admissible, laquelle dépend de la valeur de consigne et/ou de la valeur réelle du premier paramètre de fonctionnement ; dans lequel la plage de valeurs admissible comprend une valeur minimale admissible et une valeur maximale admissible, lesquelles sont différentes ; et
- pour faire fonctionner l'appareil de cuisine (100) en fonction de l'entrée utilisateur.

14. Procédé (200) de fonctionnement d'un appareil de cuisine (100) qui comprend un actionneur (104) pour l'entraînement d'un outil (105) interchangeable à l'aide duquel un aliment peut être transformé dans un récipient (106), et lequel comprend une unité de régulation de température (111) destinée à réguler la température du récipient (106) ;dans lequel le procédé (200) comprend
- détermination (201) si un outil (105) et, le cas échéant, quel outil (105) est raccordé à l'actionneur (104) ;
- en fonction de cela, détermination (202) d'une plage de fonctionnement admissible pour l'actionneur (104) et d'une plage de fonctionnement admissible pour l'unité de régulation de température (111) ; dans lequel la plage de fonctionnement admissible pour l'actionneur (104) et la plage de fonctionnement admissible pour l'unité de régulation de température (111) sont dépendantes l'une de l'autre ; et
- fonctionnement (203) de l'appareil de cuisine (100) dans le cadre des plages de fonctionnement admissibles pour l'actionneur (104) et pour l'unité de régulation de température (111), notamment dans le cadre de la combinaison de plages de fonctionnement admissible.
